# EUROPÄISCHE PATENTANMELDUNG

(11) **EP 1 818 817 A2**
(43) Veröffentlichungstag der Anmeldung: **15.08.2007**
(21) Anmeldenummer: 06026541.0
(22) Anmeldetag: 21.12.2006
(51) Int. Cl.: G06F 9/445

(54) **Ausführung von Patches mittels eines Caches**

(30) Priorität: 17.01.2006 DE 102006002181
(71) Anmelder: Giesecke & Devrient GmbH, 81677 München (DE)
(72) Erfinder: Baldischweiler, Michael, 81825 München (DE); Köglmeier, Helmut, 81545 München (DE)

(57) **Zusammenfassung**

Die vorliegende Erfindung betrifft ein Verfahren, eine Vorrichtung, ein System, einen mobilen Datenträger (10) und ein Computerprogrammprodukt zur Speicherverwaltung des mobilen Datenträgers (10) bei der Ausführung von Patches (P), die einen im ROM (14) gespeicherten Programm-Code korrigieren sollen und im EEPROM (16) abgelegt sind, wobei vorübergehend relevante Ausschnitte des Patches (P) aus dem EEPROM (16) in einen Cache (18) zum Zwecke der Ausführung geladen werden, während parallel eine Programmierung des EEPROM (16) erfolgt.

## Beschreibung

Die Erfindung liegt auf dem Gebiet der Chipkarten-Speicher-Technologie und betrifft insbesondere die Ausführung von Patches unter Verwendung eines schnellen Pufferspeichers, insbesondere eines Caches.

Aus informationstechnischer Sicht sind die wichtigsten funktionellen Bausteine eines typischen Chipkarten-Mikrocontrollers neben dem Prozessor, der Schnittstellen-Baugruppe und dem Adress- und Datenbus die verschiedenen Speicherarten, insbesondere der RAM-Baustein (random access memory), der ROM-Baustein (read only memory) und der EEPROM-Baustein (electrical erasable programmable read only memory). Bei einem ROM-Speicher können Daten nur gelesen werden; ein schreibender Zugriff ist nicht möglich. In einem ROM-Speicher einer Chipkarte befinden sich üblicherweise Programme, Betriebssystem-Routinen, Test- und Diagnose-Funktionen. Die Programme werden vom Halbleiter-Hersteller bei der Produktion der Chips eingebracht. Dabei wird aus dem Programm eine so genannte ROM-Maske erstellt.

Werden nun Fehler bei der ROM-Maske festgestellt, so sind Mechanismen notwendig, die es ermöglichen, dass der fehlerhafte Code nachträglich korrigiert wird.

Der vorstehend erwähnte Korrektur-Mechanismus wird durch die Verwendung von so genannten Patches gelöst. Dies sind kleine Korrektur-Programme, die dazu dienen, einen als fehlerhaft erkannten Programm-Code zu korrigieren. Um diese Patches in den Programmablauf zu integrieren, ist es zur Zeit vorgesehen, in die ROM-Masken Patch-Aussprünge einzubauen. Häufig sind Patch-Aussprünge in Form von Verweisen ausgebildet und zeigen in einen nicht-flüchtigen Speicherbereich der Chipkarte.

Grundsätzlich gibt es zwei Kategorien von Speicherarten: Flüchtige Speicher und nicht-flüchtige Speicher. Zu den nicht-flüchtigen Speichern zählen das ROM, das PROM, das EPROM, das EEPROM, das Flash-EEPROM und der FRAM. Bei dem RAM-Speicher handelt es sich hingegen um einen flüchtigen Speicher.

Die Patch-Aussprünge zeigen vorzugsweise - wie vorstehend erwähnt - in einen der beiden Speicherbereiche, nämlich in den nicht-flüchtigen Speicher. Aufgrund der Funktionalität der Speicherbausteine ist es notwendig, veränderliche Daten oder nachzuladende Programmteile wie beispielsweise Patches in den nicht-flüchtigen Speicherbereich abzulegen, da die Daten hier auch ohne Spannungsversorgung erhalten bleiben und sich somit bei Bedarf ändern lassen, während Daten nach einer Unterbrechung der Versorgungsspannung in einem flüchtigen Speicher nicht mehr zur Verfügung stehen.

Aus der US 626 0157 ist eine elektronische Datenverarbeitungseinheit mit einem Mikrocontroller und unterschiedlichen Speicherbausteinen, einem ROM und einem RAM, bekannt. Um zu verhindern, dass der ROM-Baustein des ASICs (ASIC steht für application specific integrated circuit) ersetzt werden muss, falls ein Fehler im ROM-Code erkannt wird oder falls sonstige Änderungen im ROM-Code notwendig sind, wird in der US 626 0157 ein Patch-Mechanismus vorgeschlagen, bei dem die Anzahl von Sprüngen zwischen ROM-Speicher und RAM-Speicher minimiert wird, in dem das Patchprogramm abgelegt ist. Diese Patch-Technologie kann jedoch nur sehr bedingt bzw. eingeschränkt auf Chipkarten, Chipkarten-Controller oder allgemein auf das Gebiet der mobilen Datenträger angewendet werden - nicht zuletzt deshalb, weil der Speicherplatz der RAM-Bausteine auf Chipkarten-Controllern grundsätzlich sehr begrenzt ist.

Im Rahmen der vorstehend erwähnten Veränderungen (von Daten und/oder Programmen auf der Chipkarte) ist es notwendig, den jeweiligen nicht-flüchtigen Speicherbaustein, wie z. B. das EEPROM oder das Flash-EEPROM, zu programmieren. Die Programmierung des jeweiligen Bausteines erfolgt durch einen Schreibzugriff.

Das Problem der im Stand der Technik bekannten Patch-Mechanismen für Chipkarten ist nun darin zu sehen, dass ein Patch bzw. die Ausführung eines Patches während einer Programmierung des nicht-flüchtigen Speicherbausteines kurzzeitig ausgeblendet wird. Dies kann teilweise schwerwiegende Folgefehler nach sich ziehen, wenn nämlich der Patch nicht vollständig ausgeführt werden konnte. Bei bisher bekannten Speicherverwaltungen war ein Zugriff auf einen Bereich eines nicht-flüchtigen Speichers (EEPROM oder Flash) während der Schreibzugriffe auf den nicht-flüchtigen Speicher im Allgemeinen nicht möglich. Sich zeitlich überschneidende Zugriffe waren bei den bisherigen Systemen im Stand der Technik nur dann möglich, wenn eine spezielle Speicher-Organisation vorgesehen war. Dazu war es notwendig, dass so genannte Dual-Ported-Speicherbausteine verwendet werden, im Gegensatz zu den üblicherweise verwendeten Single-Ported-Speicherbausteinen. Darüber hinaus musste der jeweilige Speicherbaustein so organisiert sein, dass eine physikalische Trennung von bestimmten Speicherbereichen, so genannten Pages, vorgesehen ist, um inkonsistente Datensätze zu vermeiden.

Das vorstehend beschriebene Verfahren aus dem Stand der Technik erweist sich in mehrfacher Hinsicht als nachteilig:
- Zum einen ist der RAM-Speicherbereich auf Chipkartencontrollern sehr begrenzt. Deshalb wird dieses Verfahren kaum angewandt.
- Selbst wenn der komplette Patch-Bereich aus dem nicht-flüchtigen Speicher in das RAM kopiert wurde, war die Ausführung des Patches teilweise problematisch, da für dieses Verfahren die jeweiligen Sprungadressen angepasst werden müssen.
- Ein weiteres Problem bei dem bisherigen Vorgehen ist darin zu sehen, dass die Auswertung des Patches sehr umfangreich werden kann, so dass gegebenenfalls der zur Verfügung stehende RAM-Bereich für den jeweiligen Patch nicht mehr ausreichend ist.
- Aus sicherheitstechnischen Gründen ist es nicht für jeden Controller möglich, dass der Programmcode direkt im RAM abläuft.
- Ein weiteres Problem ist gegeben, wenn die Programmier-Routine für den nicht-flüchtigen Speicherbereich durch die Ausführung eines Patches modifiziert werden soll.

Die vorliegende Erfindung hat sich deshalb zur Aufgabe gestellt, einen Weg aufzuzeigen, mit dem es möglich ist, nicht-flüchtige Speicherbereiche, insbesondere das EEPROM, zu programmieren, während parallel dazu (zeitgleich oder zeitversetzt) ein Patch ausgeführt werden kann und wobei eine deutliche Verbesserung der Performance erzielt werden soll.

Diese Aufgabe wird durch die beiliegenden Hauptansprüche gelöst, insbesondere durch ein Verfahren zur Speicherverwaltung, eine Vorrichtung und ein System zur Speicherverwaltung, durch einen mobilen Datenträger und durch ein Computerprogrämmprodukt, welcher/s mit Mitteln zur Durchführung des vorstehend erwähnten Speicherverwaltungsverfahrens ausgestattet sind.

Im Folgenden wird die Erfindung anhand der verfahrensgemäßen Lösung beschrieben. Die hier erwähnten Merkmale, Vorteile und/oder alternativen Ausführungsformen können entsprechend auch auf die anderen Lösungen der erfindungsgemäßen Aufgabe übertragen werden. Dementsprechend können die weiteren nebengeordneten Ansprüche auch durch Merkmale weitergebildet sein, die in Zusammenhang mit der Beschreibung des Verfahrens beschrieben werden oder durch Merkmale aus den Unteransprüchen zu dem Verfahren.

Die Aufgabe der Erfindung wird insbesondere gelöst durch ein Verfahren zur Speicherverwaltung eines mobilen Datenträgers bei einem Zugriff auf einen nicht-flüchtigen Speicher, zumindest umfassend ein ROM und ein EEPROM, und bei einer Ausführung von zumindest einem Patch, der zur Korrektur zumindest eines Fehlers oder zur funktionellen Erweiterung eines im ROM ablaufenden Programms bestimmt ist und der in einem nicht-flüchtigen Speicher, insbesondere im EEPROM, abgelegt ist, wobei bei dem Verfahren vorübergehend als relevant selektierte Ausschnitte des Patches aus dem EEPROM in einen flüchtigen Speicher, insbesondere in einen Cache, geladen werden, während zeitgleich oder zeitversetzt ein Zugriff auf das EEPROM ausgeführt werden kann.

Die erfindungsgemäße Lösung zielt also darauf ab, die Performance bei Speicherzugriffen und bei einer Ausführung von Patch-Programmen insofern zu verbessern, als dass ein Programm-Cache eingesetzt wird.

Der Begriff "nicht-flüchtiger Speicher" bedeutet im Rahmen dieser Erfindung all diejenigen Speicher bzw. Speicherarten, deren Inhalte nicht verloren gehen, wenn der Speicher nicht oder nicht mehr mit Spannung versorgt wird. Als Beispiele für nicht-flüchtige Speicher sind z. B. zu nennen: ROM, EEPROM, Flash-Speicher. Unter diesem Begriff sollen sowohl ganze Speicher als auch einzelne, separate Speicherbereiche zusammengefasst werden.

Die vorliegende Erfindung wird nachstehend an dem Ausführungsbeispiel beschrieben, bei dem der Patch im EEPROM (als Beispiel für einen nichtflüchtigem Speicher) abgelegt ist und bei dem die relevanten Patch-Bereiche aus dem EEPROM in den Cache verschoben werden, so dass der EEPROM für parallele Zugriffe weiterhin zur Verfügung steht, während der Patch aus dem Cache ausführbar ist. Neben der Verwendung des EEPROM als nichtflüchtigem Speicher können ebenso beliebige andere nicht-flüchtige Speicherbereiche für das erfindungsgemäße Vorgehen eingesetzt werden.

Im Gegensatz dazu kennzeichnen sich flüchtige Speicher dadurch, dass deren Inhalt verloren geht, wenn der Speicher nicht oder nicht mehr mit Spannung versorgt wird. Als Beispiel für einen flüchtigen Speicher ist das RAM zu nennen. Ebenso fallen einzelne Bereiche des RAMs in diese Kategorie.

Ein "Zugriff" auf den Speicher kann alle möglichen unterschiedlichen Arten von Zugriffen umfassen, insbesondere einen Schreib-, einen Programmier-, einen Lese-, einen Refresh-Zugriff (z.B. bei einem DRAM) etc. und/oder beliebige Kombinationen der vorstehenden Zugriffe. In der bevorzugten Ausführungsform betrifft der Zugriff jedoch einen Schreibzugriff auf den nicht-flüchtigen Speicher, da der nicht-flüchtige Speicher durch einen Schreibzugriff programmiert wird.

Bei einem "Patch" handelt es sich in der Regel um ein separates Modul, vorzugsweise um ein Software-Modul, das dazu bestimmt ist, ein vorgegebenes bereits existierendes Programm zu modifizieren oder zu ergänzen. In der Regel werden Patches eingesetzt, um relativ schnell und unkompliziert eine Programmfehlerkorrektur ausführen zu können. Häufig werden die Patches in Maschinensprache geschrieben. Dies ist jedoch kein notwendiges, sondern nur ein optionales Merkmal. In alternativen Ausführungsformen ist es auch möglich, der Patch nicht als Software-Modul, sondern als Hardware-Modul oder als kombiniertes Modul auszubilden. Üblicherweise wird ein Patch eingesetzt um bestehende Programmabläufe bzw. Hard- und/oder Software-Module zu korrigieren oder in ihrer Funktionalität zu erweitern. Es ist jedoch auch möglich, ein Patch einzusetzen, um Daten zu modifizieren. Bei einem Patch kann es sich um einen Patch für Quellcode handeln oder um einen Patch für Binärprogramme oder interpretierten Code.

Erfindungsgemäß wird unter einem "Cache" ein spezieller Pufferspeicher verstanden, der sich insbesondere durch schnelle Zugriffsmöglichkeiten - insbesondere im Vergleich zu Zugriffen auf einen langsameren Arbeitsspeicher - auszeichnet. Im Cache sind Daten bzw. Informationen abgelegt, die bereits zu einem früheren Zeitpunkt benutzt worden sind. In der Regel besteht ein Hardware-Cache aus SRAM-Bausteinen (static random access memory), die schnelle Zugriffe ermöglichen. Ein Cache kann grundsätzlich auch aus einer Gruppe von Caches bestehen. Der Cache arbeitet im Gegensatz zum Hauptspeicher meist mit dem vollen Prozessortakt, was zur Folge hat, dass Daten, die sich im Cache befinden, in der Regel unmittelbar, das heißt bereits im nächsten Takt, zur Verfügung stehen, so dass die CPU nicht erst auf den langsameren Hauptspeicherzugriff warten muss. Damit kann die Ausführungsgeschwindigkeit der Datenverarbeitung auf dem mobilen Datenträgern oder mit ihm zusammenhängenden Verarbeitungen enorm gesteigert werden. Grundsätzlich unterscheidet man einen so genannten L1-Cache, der dem Prozessor zugeordnet ist und auch Prozessor-Cache genannt wird und einen L2-Cache, der als externer Cache fungiert und auch als Speicher-Cache bezeichnet wird (L bezeichnet hier das Level des Caches). Es gibt unterschiedliche Verwaltungsstrategien für Cache-Speicher. Zur Vereinfachung der Cache-Verwaltung ist es vorgesehen, dass die zugreifbaren Speicherelemente als Gruppen von Speicherelementen organisiert sind, auf die zugegriffen wird. Eine Gruppe von Speicherelementen wird auch als Block bezeichnet. In dem Cache sind grundsätzlich nur die Blöcke abgelegt, auf die am häufigsten zugegriffen wird. Es sind unterschiedliche Mechanismen bekannt, um festzustellen, auf welche Blöcke am häufigsten zugegriffen wird und welche Blöcke ersetzt werden müssen. Die am meisten verwendete Strategie ist hierbei die LRU-Strategie (LRU steht für least recently used), bei der derjenige Block im Cache ausgetauscht wird, auf den am längsten nicht mehr zugegriffen worden ist. Die Erfindung ist jedoch nicht auf den vorstehend erwähnten Mechanismus beschränkt, sondern es können entsprechend auch andere Verdrängungs-Strategien eingesetzt werden, wie z. B. das FIFO-Prinzip, der LFU-Mechanismus (LFU steht für least frequently used), ein Random-Mechanismus und/oder ein spezifisch optimierter Mechanismus.

Üblicherweise wird die erfindungsgemäße Speicherverwaltung für einen mobilen Datenträger verwendet. Bei einem mobilen Datenträger kann es sich um eine Chipkarte, eine Smartcard oder um andere elektronische Bauteile oder Geräte handeln, die mit einem Mikroprozessor oder mit einem Mikrocontroller ausgestattet sind. Es kann sich also erfindungsgemäß um jegliche Art einer mobilen elektronischen Datenverarbeitungseinrichtung handeln.

Kerngedanke der vorliegenden Erfindung ist es, ausführbaren Patch-Code, der vorzugsweise in einem nicht-flüchtigen Speicherbereich gespeichert ist, selektiv und temporär in einen flüchtigen Speicher, vorzugsweise in einen Cache, abzulegen, um einen Zugriff auf den nicht-flüchtigen Speicher, in dem bisher der ausführbare Patch-Code gespeichert war, ausführen zu können. Damit wird es möglich, einen Zugriff auf einen nicht-flüchtigen Speicher ausführen zu können, während die Daten oder der ausführbare Code, die/der vorher in dem nicht-flüchtigen Speicher abgelegt war, ebenfalls zugreifbar ist bzw. ausgeführt werden kann. Es ist also insbesondere möglich, parallel (das heißt zeitgleich oder zeitversetzt) Daten in den nicht-flüchtigen Speicher, insbesondere das EEPROM schreiben zu können und somit das EEPROM zu programmieren und den vorher im EEPROM gespeicherten Code ausführen zu können. In einer alternativen Ausführungsform der Erfindung enthält der Patch nicht ausführbaren Programmcode, sondern zu modifizierende Datensätze oder er betrifft andere zu modifizierende Instanzen des mobilen Datenträgers.

In einer etwas allgemeineren Form bezieht sich die Erfindung deshalb auf ein Verfahren zur Speicherverwaltung für einen mobilen Datenträgers im Rahmen eines Zugriffes auf einen nicht-flüchtigen Speicher, zumindest umfassend ein ROM und ein EEPROM, bei dem zumindest ein Teil des nicht-flüchtigen Speichers, nämlich relevante Ausschnitte des nicht-flüchtigen Speicherinhaltes, vorübergehend, selektiv und temporär aus dem EEPROM in einen flüchtigen Speicher, insbesondere in einen Cache, kopiert werden so dass bei Ausführung des Patches die Kopie verwendet wird, während parallel (also zeitgleich oder zeitversetzt) ein Zugriff auf das EEPROM ausgeführt werden kann.

Vorzugsweise werden erfindungsgemäß jedoch Patches aus dem EEPROM in den Cache gesichert, die dazu bestimmt sein können, Daten oder Programme im ROM zu modifizieren und die üblicherweise eine Referenz-tabelle und einen Code-Bereich umfassen.

Im Gegensatz zu den bisher bekannten Verfahren aus dem Stand der Technik ist es erfindungsgemäß nun nicht mehr nötig, den vollständigen Patch-Bereich aus dem EEPROM in einen flüchtigen Speicher, insbesondere in das RAM, zu sichern. Erfindungsgemäß müssen lediglich die Bereiche des Patches gesichert werden, die in Bezug auf die aktuelle Ausführung des im ROM abgelegten Programms als relevant gelten. Dies betrifft insbesondere die Bereiche, die beim aktuellen Programmdurchlauf im ROM einer Modifikation oder einer Korrektor durch den Patch bedürfen. Die Sicherung der relevanten Patch-Bereiche erfolgt erfindungsgemäß nicht durch eine Speicherung im RAM, sondern im Cache. Damit können Zugriffszeiten und insgesamt die Performance des Systems deutlich verbessert werden.

Grundsätzlich ist es möglich, dass in einem Patch mehrere Korrektur-Abläufe zu dem im ROM abgelegten Programm gespeichert sind. Zu einem bestimmten Zeitpunkt, das heißt an einer bestimmten Stelle im Programmablauf des im ROM gespeicherten Programmes kann daher nur ein bestimmter Patch-Bereich von Relevanz sein. In der Regel ist es vorgesehen, dass ein im ROM oder im EEPROM ablaufender Programmcode Aussprünge (bzw. Exits) in den Patch enthält. Sobald der Programmablauf zu dem Aussprung gelangt, erhält er einen Sprungbefehl in den Patch. Üblicherweise wird über eine Referenztabelle erfasst, an welche Position des Korrektur-Codes im Patch gesprungen werden soll. Die erfindungsgemäß als relevant bezeichneten Patch-Bereiche verändern sich also dynamisch über die Zeit und sind abhängig von dem jeweils aktuellen Programmablauf im ROM.

Die Sicherung der relevanten Patch-Bereiche in dem Cache-Speicher kann erfindungsgemäß auf unterschiedliche Weise erfolgen.

Zum einen ist es möglich, dass der Patch einmalig durchlaufen und damit im Cache gespeichert wird. Dieser Durchlauf kann auch als Probedurchlauf bezeichnet werden. Zum anderen sind alternative Sicherungs-Mechanismen vorgesehen. So ist es z. B. möglich, einen Programm-Sequenzer für den Cache-Bereich abzuspeichern und zu einem späteren Zeitpunkt wieder laden zu können. Damit wird nicht der gesamte Cache-Bereich gespeichert, sondern es werden nur die Verweise auf die Programmbereiche gespeichert. Der Cache kann somit mit Programmsequenzen nachgeladen werden.

Nachdem die Sicherung der relevanten Patch-Bereiche aus dem nicht-flüchtigen Speicher, insbesondere aus dem EEPROM, ausgeführt worden ist, ist es möglich, das EEPROM zu programmieren. Dies erfolgt üblicherweise über einen Schreibzugriff. Vorteilhafterweise kann die Programmierung des EEPROM auch dann erfolgen, wenn ein Patch ausgeführt werden soll. Der Patch wird dann aus dem Cache ausgeführt. Der Zugriff auf das EEPROM oder auf einen anderen nicht-flüchtigen Speicherbereich kann mit der Patch-Ausführung parallelisiert werden. Die Ausführung muss nicht zwangsläufig zeitgleich erfolgen, sondern kann auch zeitversetzt sein.

Wird nun eine Programmsequenz aufgerufen, die ihrerseits eine Programmierung des EEPROM startet, wird zuvor der Cache wieder mit den Verweisen geladen. Der Cache lädt anhand der Verweise den entsprechenden Programmcode nach. Ein wesentlicher Vorteil des erfindungsgemäßen Verfahrens ist darin zu sehen, dass nicht der gesamte Patch bzw. Patch-Inhalt gesichert werden muss, was mit deutlichen Performance-Einbußen verbunden wäre und nur bedingt möglich ist, sondern dass nur die aktuell relevanten Programmabschnitte des Patches in den Cache gesichert oder geladen werden müssen. Nach der erfindungsgemäßen Sicherung im Cache ist es möglich, das EEPROM zu programmieren oder andere Zugriffe auf das EEPROM auszuführen und parallel (das heißt gleichzeitig, zeitversetzt oder gegebenenfalls mehrfach ineinander verzahnt) den Patch zur Ausführung zu bringen. Dabei ist es völlig frei wählbar, von welcher Art der Zugriff auf das EEPROM ist. So kann der Schreibzugriff auf das EEPROM das durch den Patch zu modifizierende Programm betreffen. Es ist aber auch möglich, dass der Zugriff davon völlig unabhängig ist und durch andere Aktionen ausgelöst wird.

Eine bevorzugte Ausführungsform der Erfindung stellt darauf ab, das vorstehend beschriebene erfindungsgemäße Vorgehen automatisch zu triggern. So kann die automatische Sicherung der EEPROM-Inhalte in den Cache-Speicher zum einen immer dann veranlasst werden, wenn der Programmablauf im ROM auf einen entsprechend Verweis bzw. auf einen Sprung in den Patch (Patch-Exit) läuft. Zum anderen ist es möglich, die Sicherung dann zu veranlassen, wenn ein Zugriff auf das EEPROM erfolgen soll. Im letzteren Fall werden die relevanten Patch-Bereiche nur dann gesichert, wenn dies auch notwendig ist, also wenn ein Zugriff auf das EEPROM ausgeführt werden soll.

In einer weiteren vorteilhaften Ausführungsform der Erfindung ist eine Speicherverwaltungseinheit, insbesondere eine zentrale Speicherverwaltungseinheit, vorgesehen, die dazu bestimmt ist, die Zugriffe auf die jeweiligen Speicherbausteine, die Sicherungs-Mechanismen und/ oder gegebenenfalls noch weitere Aktionen zu steuern und/ oder zu verwalten. In dieser Verwaltungseinheit kann es insbesondere eingestellt werden, nach welchen Kriterien und/oder wann eine Sicherung der EEPROM-Inhalte oder des Patches in den Cache ausgeführt werden soll. In alternativen Ausbildungen kann die Verwaltungseinheit noch mit weiteren Mechanismen ausgerüstet sein, um beispielsweise einen Zustand der Speicherverwaltung zu erfassen, um die Speicherverwaltung auf korrekte Funktionalität zu überprüfen oder um weitergehende Sicherheits-Checks in Verbindung mit den eingesetzten Speicherbausteinen auszuführen.

Es sei an dieser Stelle noch einmal ausdrücklich darauf hingewiesen, dass ein Aspekt der vorliegenden Erfindung darin zu sehen ist, Inhalte, insbesondere patch-bezogene Inhalte, aus einem nicht-flüchtigen Speicherbereich, insbesondere aus dem EEPROM, in einen anderen Speicherbereich, vorzugsweise in einen Speicherbereich eines flüchtigen Speichers - hier in den Cache - auszulagern und gegebenenfalls von dort auszuführen. Die Auslagerung kann jedoch auch in andere Speicherbereiche erfolgen, wie z. B. in einen externen Speicher. In der bevorzugten Ausführungsform wird hierfür ein Cache-Speicher verwendet, da dieser wesentlich schneller ist und somit die Latenz-Zeiten des gesamten Systems verringert werden können, was insgesamt zu einer deutlichen Performance-Steigerung führt.

In der bevorzugten Ausführungsform erfolgt auf das EEPROM ein schreibender Zugriff im Rahmen der Programmierung desselben. In alternativen Ausführungsformen sind jedoch auch andere Zugriffe, z. B. ein lesender Zugriff auf den Speicher vorgesehen, während gleichzeitig ein Patch ausgeführt werden soll. Auch für die Fallkonstellation kann das erfindungsgemäße Speicherverwaltungssystem eingesetzt werden.

Zusätzliche vorteilhafte Ausführungsformen ergeben sich aus den Unteransprüchen.

In der folgenden detaillierten Figurenbeschreibung werden nicht einschränkend zu verstehende Ausführungsbeispiele mit deren Merkmalen und weiteren Vorteilen anhand der Zeichnung besprochen. Es zeigen:
Fig. 1 ein Ablaufdiagramm des erfindungsgemäßen Verfahrens zur Speicherverwaltung gemäß einer bevorzugten Ausführungsform der Erfindung,
Fig. 2 eine übersichtsartige Darstellung von Speicherbausteinen mit jeweils angedeutetem Inhalt, die bei dem erfindungsgemäßen Verfahren gemäß einer weiteren, bevorzugten Ausführungsform zur Anwendung kommen und
Fig. 3 eine Übersichts-Darstellung über Bauteile einer erfindungsgemäßen Speichereinrichtung gemäß einer bevorzugten Ausführungsform der Erfindung.

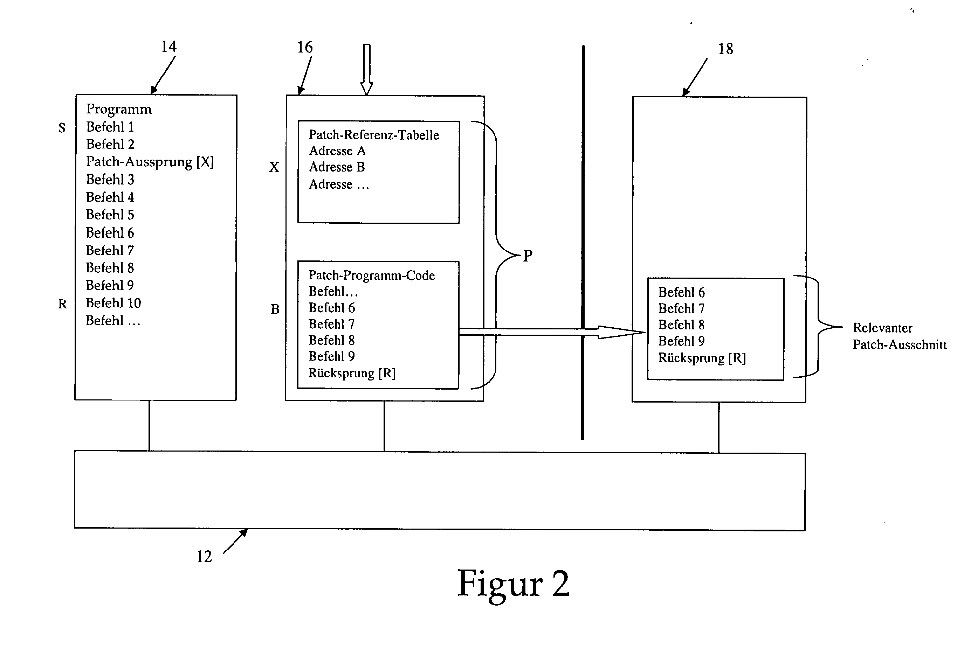

Im Folgenden wird das grundsätzliche erfindungsgemäße Prinzip in Zusammenhang mit Fig. 2 erläutert.

Im Rahmen eines Herstellungsprozesses eines mobilen Datenträgers 10, insbesondere einer Chipkarte 10 ist eine nachträgliche Modifikation und eine nachträgliche Korrektur von Programmabläufen, die in einem ROM-Speicher 14 eines Mikrocontrollers 12 abgelegt sind, nur sehr eingeschränkt möglich. Im Rahmen der Herstellung des Chips wird eine so genannte ROM-Maske entwickelt, die den eigentlichen Programmcode enthält, nach dem später der mobile Datenträger 10 betrieben werden soll. Dabei handelt es sich um Software oder um Software-Module, die sich im späteren ROM-Speicher 14 des Mikrocontrollers 12 befinden. Das Masken-ROM enthält neben dem Betriebssystem des Chips weitere Programme, unter anderem für Test- und Diagnose-Funktionen. Der Inhalt des ROMs 14 wird während der Herstellung eingebrannt und ist während der Lebensdauer des Chips und damit des gesamten mobilen Datenträgers 10 grundsätzlich unveränderbar. Ein Mechanismus um solche Veränderungen oder Korrekturen dennoch zu einem späteren Zeitpunkt (also nach Beendigung der Herstellung des Chips) ausführen zu können, sind so genannte Patches P. Dafür werden in den ROM-Masken so genannte Patch-Aussprünge oder auch Patch-Exits eingebaut. Dies sind Sprungbefehle bzw. Verweise, die in einem bestimmten Bereich eines nicht-flüchtigen Speichers der Chipkarte 10 zeigen. Ein Patch P dient also zur Modifikation oder Reparatur des Programmes, das im ROM 14 abgelegt ist, falls ein Fehler im Ablauf des Programmes erkannt wird. Ein Patch P kann also nachgeladen werden.

Das Programm, das in der Chipkarte 10 ablaufen soll, ist im ROM 14 abgelegt. Dies ist in Fig. 2 in dem auf der linken Seite befindlichen Block veranschaulicht. In Fig. 2 befinden sich auf der linken Seite des vertikalen Trennungsstriches alle nicht-flüchtigen Speicher (auch NVM-Speicher genannt, non volatile memory), bei dem die Informationen persistent gespeichert werden. Auf der rechten Seite des Trennungsstriches sind - im Gegensatz dazu - alle flüchtigen Speicher (volatile memory) der Chipkarte 10 dargestellt. Hierunter fallen ein Cache und/oder ein RAM 18. An dieser Stelle sei bemerkt, dass das erfindungsgemäße Prinzip nicht auf bestimmte Ausgestaltung von jeweils verwendeten Bausteinen beschränkt ist, so dass hier beliebige Arten und Kombinationen eingesetzt werden können, wie z. B. SRAMs, DRAMs bzw. SDRAMs, RDRAMs etc. Erfindungsgemäß soll unter einem Cache 18 ein schneller Pufferspeicher im flüchtigen Speicherbereich verstanden sein. Neben dem ROM 14 zählen ein EEPROM 16 oder weitere mögliche Bausteine, wie z. B. ein PROM, ein EPROM, ein Flash-EEPROM oder ein FRAM, zu den Speicherarten des nicht-flüchtigen Speichers.

Die im ROM 14 abgelegten Informationen können nur gelesen werden. Ein schreibender Zugriff auf diese Informationen ist grundsätzlich nicht möglich. Dahingegen können die in einem EEPROM 16 abgelegten Informationen gelesen und beschrieben werden. Beim EEPROM 16 ist also ein schreibender Zugriff möglich.

In Fig. 2 ist am Beispiel einer konkreten Code-Folge der erfindungsgemäße Mechanismus zum Speichern von relevanten Patch-Bereichen P in den Cache 18 dargestellt. Auf der rechten Seite von der vertikalen Trennlinie in Fig. 2 ist die Belegung des Caches 18 mit dem entsprechenden Patch-Abschnitt, umfassend die Befehle 6 bis 9, dargestellt.

Wie in Fig. 2 übersichtsartig dargestellt, befindet sich ein Programm, das auf der Chipkarte 10 betrieben werden soll, im ROM 14. Es startet bei der Adresse S mit einem ersten Befehl, dem sich weitere Befehle anschließen. Wie in Fig. 2 beispielhaft dargestellt ist, befindet sich nach dem zweiten Befehl ein Patch-Aussprung an die Adresse X.

Der Patch P ist im EEPROM 16 abgelegt. Ein Patch P umfasst hier eine Patch-Referenz-Tabelle (auch Patch-Vektor-Tabelle genannt) und einen Programm- bzw. Code-Bereich. In der Referenz-Tabelle ist eine Folge von Adressen abgelegt. In Fig. 2 befindet sich an der Adresse "X" die Angabe "Adresse B". Dies ist eine Adresse im Programmcode, der sich an einer anderen Stelle des nicht-flüchtigen Speichers befinden kann. Im Programmcode befindet sich an der Adresse "B" wiederum eine Folge von Befehlen. In Fig. 2 sind dies die Befehle 6, 7, 8 und 9. Danach findet sich ein Rücksprungbefehl an die Rücksprungadresse "R" im ROM-Code. Dies ist mit dem Zeichen "R" an der linken Seite des ROM-Blockes 14 gekennzeichnet.

Im Betrieb führt der Prozessor die Befehle 1 und 2 aus, beginnend an der Adresse "S" im ROM 14. Nach dem zweiten Befehl erfolgt ein Verweis auf den im EEPROM 16 gespeicherten Patch P. Nach dem Zugriff auf die Patch-Referenz-Tabelle kann nun der modifizierte Code - nämlich die Befehle 6, 7, 8 und 9 - ausgeführt werden. Anschließend wird - basierend auf dem Rücksprungbefehl - das ROM-Programm an der Adresse "R" fortgesetzt mit den Befehlen 10, gefolgt von weiteren Befehlen.

Die sich bei Ausführung des in Figur 2 angedeuteten Patches P ergebende Code-Folge kennzeichnet sich durch folgende Befehlssequenz:
- Befehl 1,
- Befehl 2,
- Sprung in den Patch (Tabelle) an Adresse X,
- Sprung in den Patch-Code an Adresse B
- Befehl 6,
- Befehl 7,
- Befehl 8,
- Befehl 9,
- Rücksprung an Adresse R in den ROM-Code,
- Befehl 10,
- Befehl...

Wie in Fig. 2 dargestellt, interagieren alle Speicherarten, wie der ROM 14, das EEPROM 16 und der Cache 18 mit dem Mikrocontroller 12.

Erfindungsgemäß wird nun der relevante Patch-Code aus dem EEPROM 16 in den Cache 18 gesichert. Dabei ist wesentlich, dass nicht der gesamte Patch-Code P in den Cache 18 geladen wird, sondern jeweils nur der relevante Teil. Der relevante Patch-Abschnitt, der in den Cache 18 geladen wird, ist zur Laufzeit dynamisch veränderlich. Es wird immer nur der Patch-Abschnitt gesichert, der beim aktuellen Programmablauf im ROM 14 notwendig ist, bzw. "gepatcht" werden soll.

Es ist möglich, dass der Patch-Code alternativ oder kumulativ zu dem im ROM 14 abgelegten Code ausgeführt wird. Dies kann durch einen entsprechenden Eintrag bzw. durch die Angabe der Sprungadressen eingestellt werden.

Es ist auch möglich, dass das im ROM 14 befindliche Programm oder einzelne Programmabschnitte nicht "gepatcht" werden müssen. Dann gibt es keinen Patch-Code im EEPROM 16, der alternativ oder ergänzend zum ROM-Code ausgeführt werden muss. In diesem Fall ist es nicht notwendig, Speicherinhalte (z. B. Patch-Code P) vom EEPROM 16 in den Cache 18 zu laden, obwohl zeitgleich oder parallel ein weiterer Zugriff auf den EEPROM 16 erfolgen soll.

Üblicherweise läuft der durch den Patch P zu modifizierende Code im ROM 14 ab. Alternativ dazu ist es möglich, dass dieser Code im EEPROM 16 abläuft.

In Fig. 2 soll das Sichern des relevanten Patch-Abschnittes von dem EEPROM 16 in den Cache 18 durch den nach rechts weisenden horizontalen Doppelpfeil gekennzeichnet sein. Der parallele Schreibzugriff auf das EEPROM 16 soll durch den vertikal auf das EEPROM 16 zeigenden Doppelpfeil gekennzeichnet sein.

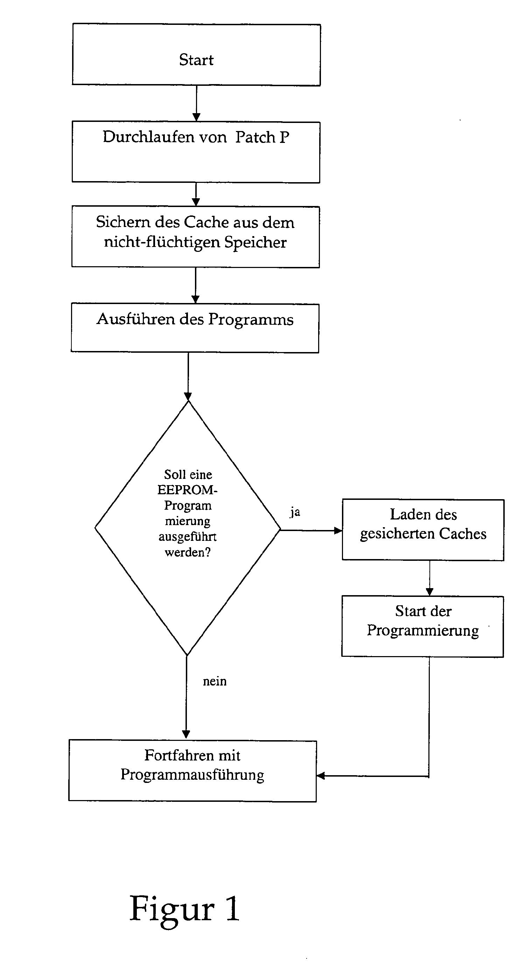

Im Folgenden sei in Zusammenhang mit Fig.1 der erfindungsgemäße Ablauf des Speicherverwaltungsverfahrens dargestellt.

Nach dem Start wird zumindest ein Patch P dahingehend analysiert, ob und gegebenenfalls wie er in den Cache zu laden ist.

Um zu bestimmen ob ein Patch in den Cache zu laden ist, sind verschiedene Methoden und Zeitpunkte denkbar. Beispielsweise kann die Analyse jeweils für zumindest einen vorbestimmten Programmbereich im ROM 14 erfolgen, wie die Steuerung der Kommunikation mit externen Einheiten (Protokoll T=0, T=1, kontaktlos ...).

In einem nächsten Schritt wird der relevante Patch-Bereich aus dem nicht-flüchtigen Speicher 16 in den Cache 18 geladen und gesichert, um danach das eigentliche Programm im ROM 14 auszuführen. Wenn nun parallel zur Ausführung des Patches P ein Schreibzugriff auf den nicht-flüchtigen Speicher 16 in Form einer Programmierung des jeweiligen Speichers 16 erfolgen soll, wird der im Puffer-Cache 18 zwischengespeicherte relevante Patch-Code P aus dem Cache 18 geladen und zur Ausführung gebracht. Parallel dazu kann eine Programmierung des nicht-flüchtigen Speichers 16 erfolgen.

Bei dem in Fig.1 dargestellten Ablauf des erfindungsgemäßen Verfahrens gemäß einer bevorzugten Ausführungsform ist es vorgesehen, dass nach dem Sichern des relevanten Patch-Bereiches P das Programm im ROM 14 fortgesetzt bzw. ausgeführt wird. Daraufhin erfolgt eine Fallunterscheidung, in der überprüft wird, ob das EEPROM 16 über einen Schreibzugriff programmiert werden soll. Falls dies der Fall ist, wird in den in Fig.1 auf der rechten Seite dargestellten Ast verzweigt und es wird der gesicherte Cache 18 geladen. Daraufhin kann die Programmierung des EEPROM 16 erfolgen. Anschließend wird mit der Ausführung des im ROM 14 gespeicherten Programm-Codes fortgefahren. Im anderen Fall (wenn also keine Programmierung des EEPROMs 16 erfolgen soll) wird das Programm im ROM 14 ohne weitere Aktionen fortgesetzt. Dies ist in Figur 1 in dem mit "nein" gekennzeichneten Ast dargestellt.

Wie in Fig. 2 beispielhaft dargestellt, erfolgt der erfindungsgemäße Zugriff auf den Patch P über eine Adresse und damit indirekt. Mit diesem dynamischen und indirekten Zugriff ist es möglich, die Nachteile bei dem Verfahren aus dem Stand der Technik zu überwinden. Im Gegensatz zum Stand der Technik ist es bei dem erfindungsgemäßen Verfahren nicht notwendig, den gesamten Patch-Bereich - bestehend aus Referenz-Tabelle und Patch-Code - zu speichern. Damit können enorme Performance-Vorteile erzielt werden. Bei einem Cache-Hit (Treffer im Cache) ist der angeforderte Bereich im Cache 18 vorhanden, so dass der Mikrocontroller 12 auf dieses Datum schnell zugreifen kann. Bei einem so genannten First-Level-Cache kann der Zugriff genauso schnell erfolgen, wie auf ein internes Register. Bei einem Cache-Miss (kein Treffer im Cache) steht das angeforderte Datum nicht im Cache und muss erst nachgeladen werden. Je nach Art des Caches 18 können hier mehrere Taktzyklen notwendig sein.

Mittels des erfindungsgemäßen Verfahrens kann die Arbeitsweise eines Caches 18 optimal ausgenutzt werden, indem der Cache 18 nicht unnötig mit Patch-Code P überfrachtet wird, sondern indem nur die relevanten Teile des Patches P bei der Ausführung des Programmes gesichert werden. Da Speicherplatz im Cache 18 grundsätzlich beschränkt ist, stellt dieses Merkmal einen deutlichen Performance-Vorteil dar.

Im Gegensatz zu dem erfindungsgemäßen Vorgehen wird bei dem aus dem Stand der Technik bekannten Patch-Verfahren der gesamte Patch-Code (einschließlich Referenz-Tabelle und Programmcode) in den Cache 18 kopiert. Ein Beispiel hierfür ist in der US 6 260 157 erläutert. Diese Druckschrift sei als Beispiel für das bisher übliche Patching vollinhaltlich in die vorliegende Anmeldung aufgenommen.

Mit anderen Worten kennzeichnet sich der erfindungsgemäße Patch-Mechanismus durch ein selektives Sichern der relevanten Patch-Bereiche P. Es wird jeweils nur der Teil des Patches P geladen, der auch tatsächlich nötig ist, weil er absehbar während des Schreibzugriffes auf das EEPROM 16 durchlaufen werden wird. In der bevorzugten Ausführungsform wird der relevante Patch-Bereich P in den Cache 18 gesichert. Es ist in alternativen Ausführungsformen jedoch ebenso möglich, diesen im RAM zu sichern.

Üblicherweise wird dabei zumindest eine (gegebenenfalls minimierte) Version einer Patch-Referenz-Tabelle in den Cache 18 geladen werden.

In der Referenz-Tabelle stehen Angaben darüber, wann Korrekturen an einer bestimmten Stelle des Programm-Codes im ROM 14 notwendig sind. Üblicherweise umfasst die Referenz-Tabelle zwei Spalten. In der ersten Spalte befinden sich wie üblich Angaben darüber, von welcher Code-Adresse aus dem ROM-Code der Einsprung in den Patch P erfolgte und in der zweiten Spalte befindet sich ein Verweis auf den jeweils zu verwendenden Korrektur-Code im EEPROM 16. Um zu bestimmen, ob der ein Patch in den Cache gesichert werden sollte, könnte beispielsweise die Patch-Referenz-Tabelle so sortiert sein, dass zuerst alle zu sichernden und dann die nicht zu sichernden Einträge aufgelistet sind. Die Anzahl der zu sichernden Patches bzw. die Grenze zwischen den Bereichen in der Patch-Referenz-Tabelle wäre dann entsprechend zu speichern und auszuwerten.

In einer bevorzugten Ausführungsform der Erfindung ist die Referenz-Tabelle, die in den Cache 18 geladen wird, minimiert. Die minimierte Referenz-Tabelle besteht in dem Ausschnitt der Referenz-Tabelle, die in dem aktuellen Fall relevant ist. In einigen Fällen kann es vorgesehen sein, jeweils nur eine Zeile der Tabelle zu sichern.

In einer bevorzugten Ausführungsform der Erfindung ist es vorgesehen, dass der Patch P einmal durchlaufen wird. Dieser "Probedurchlauf" dient dazu, die angesprungenen EEPROM-Code-Bereiche automatisch zu sichern. In dieser Ausführungsform werden die Patch-Bereiche, die in dem Probedurchlauf durchlaufen worden sind, beispielsweise nur einer von drei möglichen Ausführungspfaden, in den Cache 18 geladen.

In alternativen Ausführungsformen können zusätzlich noch weitere Daten in den Cache 18 geladen werden. Beispielsweise ist es möglich, den Patch-Controller zu laden, der die Steuerung der Patches P durchführt.

In einer vorteilhaften Weiterbildung der Erfindung umfasst das Verfahren einen Cache-Lock-Mechanismus. Dieser Cache-Lock-Mechanismus ist dazu bestimmt, dass der Inhalt des Caches 18 für eine spätere Verwendung im Cache 18 gespeichert bleibt. Der Cache 18 wird im Rahmen des Probedurchlaufs gefüllt und danach gesperrt. Damit steht er auch zu einem späteren Zeitpunkt bei einem Schreibzugriff auf das EEPROM 16 zur Verfügung. Ein Vorteil bei der Verwendung des Cache-Lock-Mechanismus ist darin zu sehen, dass wenig bis kein zusätzlicher Verwaltungsaufwand erforderlich ist. Allerdings ist dies mit einem Nachteil verbunden, da grundsätzlich relativ viel Cache-Speicherplatz verbraucht wird, der gegebenenfalls über einen eventuell längeren Zeitraum gar nicht notwendig wäre.

Alternativ oder kumulativ zu dem vorstehend erwähnten Cache-Lock-Mechanismus kann erfindungsgemäß ein Verweis-Mechanismus vorgesehen sein. Bei dem Verweis-Mechanismus notiert sich das System (im RAM bzw. im Cache 18 oder im EEPROM 16) während des Probedurchlaufs jeweils die Start- und End-Adressen von den verwendeten EEPROM-Bereichen. Gegebenenfalls kann ein EEP-Code des Patch-Controllers mitgeladen werden. Vor dem Schreibzugriff auf das EEPROM 16 wird anhand der relevanten EEPROM-Bereiche der Cache 18 befüllt.

Andere Weiterbildungen der Erfindung sehen eine Mischung aus dem Cache-Lock-Mechanismus und dem Verweis-Mechanismus vor. Der Cache-Lock, also die Sperrung des Cache-Inhaltes, wird dann basierend auf einer modifizierten Cache-Kopie der Referenz-Tabelle ausgeführt. Aus einer Referenz-Tabelle mit einer bestimmten Anzahl von Einträgen wird dann eine Cache-Kopie mit einer deutlich geringeren Anzahl von Einträgen, nämlich den relevanten Einträgen, erstellt.

Zu jeder notierten Zeile der Referenz-Tabelle wird ein zusätzliches Datum abgelegt. Dieses Datum bezieht sich darauf, wie viel Code durchlaufen worden ist (Ende der Adresse) und gegebenenfalls darauf, welche Verweise oder Verzweigungen es gibt (wiederum die Start- und End-Adresse).

Zu einem späteren Zeitpunkt werden die Code-Bereiche anhand der Angaben im Cache 18 geladen.

Vorteilhafterweise kann mit dem erfindungsgemäßen Verfahren der Verbrauch an Cache- und/oder RAM-Speicherplatz deutlich reduziert werden, so dass das Laden schneller erfolgen kann.

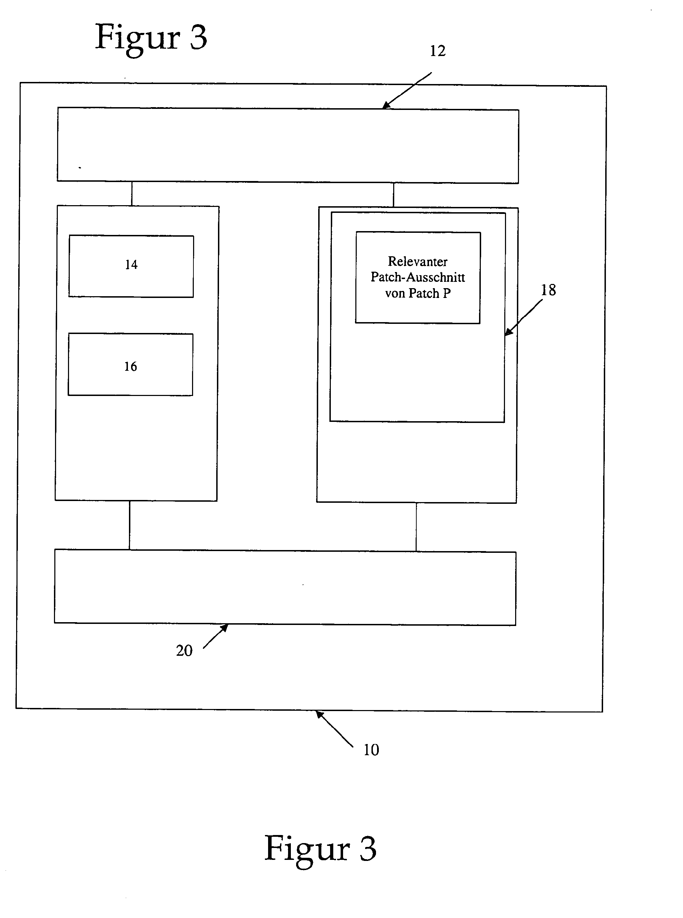

Wie in Fig. 3 dargestellt, umfasst die erfindungsgemäße Speichervorrichtung gemäß der bevorzugten Ausführungsform das ROM 14 und das EEPROM 16 als nicht-flüchtige Speicherarten und das RAM bzw. den Cache 18 als flüchtigen Speicher. Darüber hinaus ist ein Mikrocontroller 12 vorgesehen, der in Datenaustausch mit den Speichern 14, 16, 18 steht. In einer vorteilhaften Weiterbildung der Erfindung umfasst die Speichervorrichtung zusätzlich eine zentrale Speicherverwaltungsinstanz 20. In Fig. 3 ist die Verwaltungsinstanz 20 als eigenständiges, separates Modul abgebildet. Üblicherweise wird sie jedoch dem Mikrocontroller 12 zugeordnet oder in diesem integriert sein. Die Verwaltungsinstanz 20 dient zur Organisation der unterschiedlichen Speicherbausteine und steuert den Zugriff auf dieselben. Darüber hinaus können in der Verwaltungsinstanz 20 weitere Funktionalitäten vorgesehen sein, z. B. Sicherheitsfunktionen und weitere Optimierungs-Mechanismen für den Betrieb der Chipkarte 10.

Abschließend sei darauf hingewiesen, dass es sich bei der vorstehenden detaillierten Figurenbeschreibung lediglich um ein Ausführungsbeispiel handelt, welches vom Fachmann in unterschiedlichster Weise modifiziert werden kann, ohne dass der Bereich der Erfindung verlassen wird. Darüber hinaus sind auch andere physikalische Realisierungen der Erfindung möglich. Für einen Fachmann ist es insbesondere offensichtlich, dass die Erfindung auch als heterogenes System, teilweise oder vollständig durch Software- und/oder Hardware-Module und/ oder auf mehrere physikalische Produkte - dabei insbesondere auch Computerprogrammprodukte - verteilt realisiert sein kann.

## Patentansprüche

1. Verfahren zur Speicherverwaltung eines mobilen Datenträgers (10) im Rahmen einer Ausführung von zumindest einem Patch (P) und bei einem Zugriff auf einen nicht-flüchtigen Speicher (14, 16), wobei der Patch (P) zur Modifikation eines in dem nicht-flüchtigen Speicher (14, 16) ablaufenden Programmes bestimmt ist und seinerseits in einem Bereich des nicht-flüchtigen Speichers (16) abgelegt ist, wobei vorübergehend relevante Ausschnitte des Patches (P) aus dem nicht-flüchtigen Speicherbereich (16) in einen flüchtigen Speicher (18) zum Zwecke der Ausführung geladen werden, während parallel ein Zugriff auf den nicht-flüchtigen Speicher (14,16) ausgeführt werden kann.

2. Verfahren nach Anspruch 1, **dadurch gekennzeichnet, dass** der Patch (P) aus einer externen oder internen Instanz nachgeladen werden kann.

3. Verfahren nach Anspruch 1 oder 2, **dadurch gekennzeichnet, dass** die relevanten Ausschnitte aus dem Patch (P) dynamisch in Abhängigkeit von einem im nicht-flüchtigen Speicher (14) ablaufenden Programm-Code generiert werden.

4. Verfahren nach zumindest einem der vorhergehenden Ansprüche, **dadurch gekennzeichnet, dass** der Patch (P) jeweils, zum Zwecke des Ladens in den flüchtigen Speicher (18), einmal durchlaufen wird.

5. Verfahren nach zumindest einem der vorhergehenden Patentansprüche, **dadurch gekennzeichnet, dass** bei dem Laden des relevanten Ausschnitts aus dem Patch (P) jeweils ein begrenzter Ausschnitt aus einer Referenz-Tabelle des Patches (P) in den flüchtigen Speicher (18) geladen wird.

6. Verfahren nach zumindest einem der vorhergehenden Ansprüche, **dadurch gekennzeichnet, dass** die relevanten Ausschnitte des Patches (P) beim Laden in den flüchtigen Speicher (18) nicht direkt sondern nur indirekt über Verweise adressiert werden.

7. Verfahren nach zumindest einem der vorhergehenden Ansprüche **dadurch gekennzeichnet, dass** der nicht-flüchtige Speicher ein ROM (14) oder ein EEPROM (16) ist und/ oder dass der flüchtige Speicher (18) ein RAM oder ein Cache (18) ist.

8. Vorrichtung zur Speicherverwaltung eines mobilen Datenträgers (10), umfassend:
- einen ROM (14), in dem zumindest ein Programm abgelegt ist;
- einen nicht-flüchtigen Speicherbereich, insbesondere ein EEPROM (16), in dem ein Patch (P) abgelegt ist, der zur Modifikation des im ROM (14) abgelegten Programms bestimmt ist,;
- einen flüchtigen Speicher (18), der zur temporären Speicherung von relevanten Ausschnitten des Patches (P) bestimmt ist, während ein Zugriff auf den nicht-flüchtigen Speicher ausgeführt wird;
- einen Mikrocontroller (12), der zum Betrieb des mobilen Datenträgers (10) bestimmt ist und
- gegebenenfalls mit einer Verwaltungsinstanz (20), die zur zentralen Verwaltung der Speicher (14, 16, 18) des mobilen Datenträgers (10) bestimmt ist.

9. Mobiler Datenträger (10), der das Ausführen von Patches (P) unterstützt und der eine Vorrichtung zur Speicherverwaltung gemäß Anspruch 8 umfasst.

10. System zur Modifikation eines in einem ROM (14) eines mobilen Datenträgers (10) gespeicherten Programms durch ein Ausführen von zumindest einem Patch (P), der in einem EEPROM (16) abgelegt ist, wobei während der Ausführung des Patches (P) ein Zugriff auf das EEPROM (16) ausgeführt werden kann, indem Speicher (14,16,18) des mobilen Datenträgers (10) mit einem Verfahren gemäß einem der Ansprüche 1 bis 7 betrieben werden.

11. Computerprogrammprodukt, welches direkt in einen Speicher eines mobilen Datenträgers (10) ladbar ist, mit Programm-Code-Mitteln, um alle Schritte eines Verfahrens nach zumindest einem der Ansprüche 1 bis 7 auszuführen, wenn das Programm in dem mobilen Datenträger (10) ausgeführt wird.
